# EUROPEAN PATENT APPLICATION

(11) **EP 4 813 601 A1**
(43) Date of publication of application: **30.09.2026**
(21) Application number: 25382284.5
(22) Date of filing: 25.03.2025
(51) Int. Cl.: B29C 35/02, B29C 73/02

(54) **METHOD AND DEVICE FOR REPAIRING AN ELEMENT OF COMPOSITE MATERIAL**

(71) Applicant: Airbus Operations, S.L.U., 28906 Getafe-Madrid (ES); Airbus Operations Limited, Bristol BS34 7PA (GB)
(72) Inventor: NIETO LEON, Ines, 28906 Getafe (ES); KHEMIRI, Nizar, Bristol, BS34 7PA (GB); GARCIA LOPEZ-VARELA, Jorge, 28906 Getafe (ES)
(74) Representative: Elzaburu S.L.P.

(57) **Abstract**

Method and device for repairing an element (100) of composite material, the method comprising infusing a resin (300) into the internal damaged area (101) of the element (100) of composite material, wherein the method further comprises: drilling on the element (100) of composite material at least one first non-through hole (200a) and at least one second non-through hole (200b), each of the non-through holes (200) running from one face of the element (100) of composite material up to the internal damaged area (101), and infusing the resin (300) from the at least one first non-through hole (200a) until the resin (300) fills at least the internal damaged area (101) of the element (100) of composite material. The method comprises applying vibrations at a given frequency to the element (100) of composite material.

## Description

### Technical field

The present invention is directed to a method for repairing an element of composite material, specially indicated for repairing aircraft parts or components made of thermoset composite materials.

The present invention further relates to a device for repairing an element of composite material, specially indicated for repairing aircraft parts or components made of thermoset composite materials.

The device and the method of the present invention are intended for repairing structural parts or components of an aircraft which have suffered a damage, allowing for the restoration of the mechanical strength of such part or component to its initial design requirements.

This invention is preferably applicable in the field of manufacturing and maintenance of composite parts/components for transport applications such as aircrafts.

### Background of the invention

Composite materials forming parts or components of an aircraft often suffer internal damages, due to several causes such as impacts with objects.

These internal damages cannot be detected by a visual inspection of the aircraft. However, internal cracks or damages can be detected using non-destructive methods such as ultrasonic inspection methods.

The internal cracks or damages in composite components of the aircraft can have an impact on the structural properties. Thus, it is essential to detect these internal damages and repair them.

Currently, bonded repairs involve machining out the damaged plies on the area by stepping or scarfing the surface around the damage using a grinding or milling machining process. The step length usually is between 8 and 12 mm, and the scarf ratio is usually less than 1:20. A wet lay-up repair, hot-bond repair, or a pre-cured patch repair method can be used to apply a repair patch to the parent structure.

Wet lay-up repair consists of a dry fibre fabric impregnated with laminating resin and then applied to a cured composite part.

Hot bond repair is the use of repair prepreg composite materials and an adhesive film to make a bonded repair.

For wet lay-up and hot bond scarf repairs, the repair plies are cut to precise dimensions to allow installation of the repair laminate while achieving a defined overlap length of contact with the original laminate along the stepped or the scarfed surface. This overlap length is generally about 8 - 12mm.

In these approaches, a curing cycle is applied to cure repair materials. In addition, vacuum pressure must be applied to consolidate the repair by means of a vacuum bag.

Hot-bond and wet lay-up repairs are widely used by airlines for repairs on thermoset composite parts. However, the storage under certain temperature conditions and shelf-life limit of prepreg composite repair materials, used for hot bond repair, is considered to be the main disadvantage of this repair method. Moreover, controlling the ratio of the different components to prepare the repair resin and ratio for dry fabric impregnation may be difficult to achieve for wet lay-up repair. Additionally, in most applications, the repair material has lower material properties than the part to be repaired, due to different fibre and resin material and curing process compared to the parent material.

Another disadvantage of current bonded repair methods, hot bond and wet lay-up repairs, is the relatively long time associated with completion of the bonded repair. The machining of the damaged plies is the most time-consuming phase plus there is a risk of creating new damages. Another time-consuming step is related to the strict repair ply preparation procedure. In addition, the positioning of the uncured plies must be precise to achieve the minimum overlap along the edge of the plies.

### Summary of the invention

With the aim of providing a solution to the abovementioned problems, the present invention refers to a method and a device for repairing an element of composite material.

The method for repairing an element (or component) of composite material comprises, upon detection of an internal damaged area (porosities or delaminated material) within the element of composite material, infusing a resin into the internal damaged area of the element of composite material.

The method for repairing an element (or component) of composite material comprises:
- drilling the element of composite material with at least one first non-through hole (preferably of a small diameter of, for example, approximately 2 mm) and at least one second non-through hole (preferably of a small diameter of, for example, approximately 2 mm), each of the non-through holes running from one face of the element of composite material up to (at least) the internal damaged area, and;
- infusing the resin from the at least one first non-through hole until the resin fills at least part of the internal damaged area of the element of composite material. Preferably, the resin infused fills both the internal damaged area and the non-through holes.

In a novel manner, the method comprises applying vibrations at a given frequency to the element of composite material.

Thanks to the method specified above, there is no need to perform any machining out operation on the element or component of composite material to be repaired. The restoration of the loading capacity of the element of composite material is achieved by means of the resin infusion, and the resin infusion is applied by injecting the resin through non-through holes (non-passing-through holes), thereby reducing the structural impact of these holes on the structural integrity and loading capacity of the element of composite material.

Moreover, the application of vibrations to the element of composite material facilitates and enhances the resin flow within the internal damaged area of the element of composite material. Furthermore, by means of the application of a vibration movement to the element of composite material, it is facilitated that any gas bubbles contained within the internal damaged area flow out and do not get trapped into the resin when the resin is cured.

The application of vibrations to the element of composite material may comprise using mechanical means directly impacting or shaking the element of composite material.

The application of vibrations to the element of composite material may (alternatively or in addition to the vibrations mentioned in the previous paragraph) comprise applying varying vacuum at the at least one second non-through hole.

According to a preferred embodiment of the invention, the vibrations are applied at a frequency value between 0,5 and 1,5 of the normal frequency mode corresponding to the element of composite material. This value typically corresponds to a frequency value comprised between 20 Hz and 1000 Hz.

The method for repairing an element (or component) of composite material may comprise heating the resin prior to infusing the resin into the internal damaged area of the element of composite material. This operation may reduce the viscosity value of the resin, thereby facilitating the infusion process.

The method may also comprise heating the resin after infusing the resin into the internal damaged area of the element of composite material. This operation may help to maintain a specific infusion temperature and/or to accelerate the curing of the resin.

In cases where only one side of the element of composite material is accessible, the at least one first non-through-hole and the at least one second non-through-hole may run from one and the same face of the element of composite material up to, at least, the internal damaged area.

Alternatively, when both sides of the element of composite material are accessible, the at least one first non-through-hole preferably runs from a first face (the inlet side) of the element of composite material up to, at least, the internal damaged area and the at least one second non-through-hole runs from a second face (the outlet side) of the element of composite material up to, at least, the internal damaged area. This embodiment allows to infuse resin on one face (the inlet side) of the element of composite material and, eventually, apply vacuum on the other face (the outlet side) of the element of composite material. It therefore facilitates the infusion of the resin when both faces are accessible for the repair method.

Each first non-through-hole and each second non-through-hole may be distributed in such a way that the projection of each first non-through-hole on the second face of the element of composite material does not coincide with the projection of any second non-through-hole on the second face of the element of composite material and vice versa. Thus, the non-through-holes are distributed such that the second non-through-holes are not in front of the first non-through-holes.

As has already been introduced, the present invention further relates to a device for repairing an element of composite material, the device being configured to perform the method for repairing an element of composite material as above.

The device for repairing an element of composite material, according to the present invention, comprises:
o a resin reservoir configured to contain resin to be infused into the internal damaged area of the element of composite material through the at least one first non-through hole;
o an outlet bell connected to an outlet conduct, the outlet bell comprising a housing configured to define a receptacle between the at least one second non-through hole and the outlet conduct, the receptacle being isolated from the resin reservoir, wherein the receptacle is configured to receive the resin flowing out from the at least one second non-through hole, and;
o means for generating vibrations to be transmitted to the element of composite material

According to an embodiment of the invention, the means for generating vibrations to be transmitted to the element of composite material comprise a vibrating module configured to generate mechanical vibrations to be transmitted to the element of composite material.

Alternatively or in addition to the vibrating module mentioned in the previous paragraph, the means for generating vibrations to be transmitted to the element of composite material may comprise a vacuum percussion module configured to establish a percussion mode governing the application of vacuum to the interior of the receptacle.

The device for repairing an element of composite material preferably comprises a heating module configured to heat the resin contained within the resin reservoir.

The heating module may also be configured to heat the resin already infused into the internal damaged area of the element of composite material.

The vacuum bell preferably comprises a first sealing joint configured to seal the interface between the housing and the surface of the element of composite material.

Furthermore, the resin reservoir preferably comprises a second sealing joint configured to seal the interface between the resin reservoir and the surface of the element of composite material.

According to a second embodiment of the device for repairing an element of composite material, the housing of the vacuum bell is configured to generate two separate internal spaces within the housing, namely:
o a first internal space configured as the resin reservoir and configured to contain the resin which is to be infused within the internal damaged area, and;
o a second internal space configured as the receptacle and connected to the vacuum conduct.

### Brief description of the drawings

As a means for better understanding at least one embodiment of the present invention, the following set of drawings is introduced by way of schematic illustration and in a non-limitative manner.
Figure 1: Shows a schematic view of a conventional scarf repair of an element of composite material.
Figure 2: Shows a schematic view of an element of composite material with an internal damaged area.
Figure 3: Shows a schematic view of the element of composite material of Figure 2, with several non-through holes drilled from both faces of the element of composite material up to the internal damaged area.
Figure 4: Shows a schematic view of the element of composite material of Figure 4, wherein the internal damaged area and the non-through holes have been filled with resin.
Figure 5: Shows a schematic view of a device for repairing an element of composite material, according to a first embodiment of the present invention.
Figure 6: Shows a schematic view of a device for repairing an element of composite material, according to a second embodiment of the present invention.

### Detailed description

The present invention, as already introduced, refers to a method and a device (400) for repairing an element (100) of composite material.

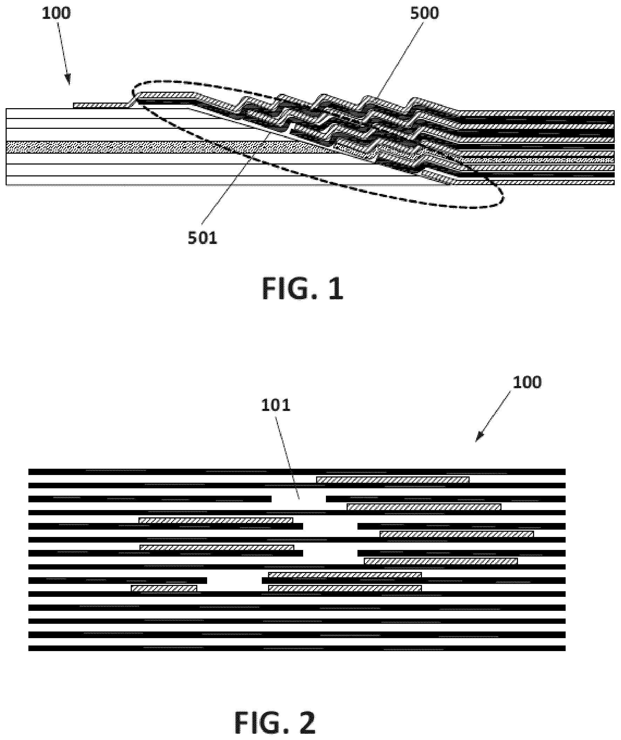

Figure 1 shows a schematic view of an element (100) of composite material repaired according to a conventional method, in which both the damaged or cracked surface of the element (100) to be repaired and the contact surface (501) of the repair ply (500) have been machined or scarfed (e.g., using a grinding or milling machining process) and the repair ply (500) has been cut to precise dimensions to allow attaching the repair ply (500) to the element (100) to be repaired and achieving a defined overlap length of contact surface (501) with the element (100) to be repaired along the stepped or the scarfed contact surface (501).

Figure 2 to Figure 4 respectively represent consecutive phases in the repairing method of the present invention.

The conflicting situation arises when an internal damage or crack occurs in an element (100) of composite material, as illustrated in Figure 2. This damage or crack involves the generation of at least one internal cavity of delaminated material in the interior of the element (100) of composite material.

The method comprises, upon detection (e.g., by means of an ultrasound inspection method) of an internal damage area (101) or an internal crack within a component or an element (100) of composite material, drilling a plurality of non-through-holes (200) from at least one of the sides (102) or faces of the element (100) of composite material, each of the non-through-holes (200) running from one of the sides (102) or faces of the element (100) of composite material up to the internal damaged area (101) (or internal cracked area) within the element (100) of composite material.

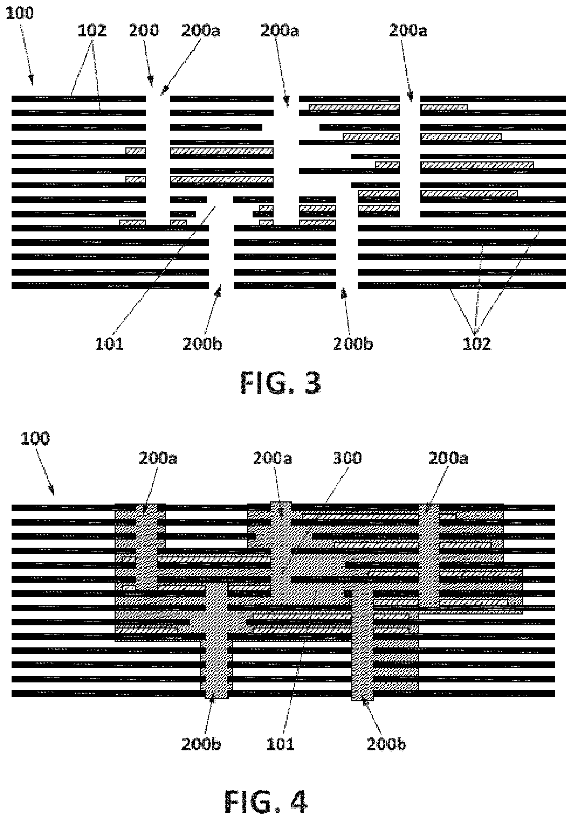

Figure 3 shows a plurality of non-through holes (200) drilled from each of the sides (102) or faces of the element (100) of composite material.

As already introduced, the internal damaged area (101) typically comprises at least one internal cavity where the structure of composite material has been delaminated creating areas of disbanding between plies.

The holes drilled on the element (100) of composite material to be repaired are non-through-holes (200) (non-passing-through holes) of a reduced diameter (typically 2 mm diameter), such that the integrity and structure of the element (100) of composite material is not critically affected.

The method comprises infusing a resin (300) from at least one first non-through-hole (200a) and applying vacuum from at least one second non-through-hole (200b).

By means of the vacuum applied from at least one second non-through-hole (200b), air is extracted from the internal damaged area (101) and the resin (300) flows from the at least one first non-through-hole (200a), flooding the internal damaged area (101) of the element (100) of composite material, up to the at least one second non-through-hole (200b).

The vacuum is applied in a percussion mode where vacuum is applied at a given frequency with different pressure values following a given frequency. For instance, 0.8 mBar, 0.6 mBar, 0.4 mBar, 0.2 mBar and then back to a new cycle of 0.8 mBar, 0.6 mBar etc. Ideally, the vacuum percussion will be activated once the resin (300) has started to flow on the outlet side of the composite laminate.

Vacuum percussion is meant to help the resin (300) flow by applying the vacuum in cyclic stages and to remove air pockets which may result in the development of porosities.

A vibration is applied to the element (100) of composite material in order to facilitate the movement of bubbles inside the delaminated area so that gas come out from the internal damaged area (101) when the resin (300) is infused. Vibration is preferably applied at a frequency between 20 and 1000 Hz.

Figure 4 shows the internal damaged area (101) of the element (100) of composite material and the non-through holes (200) filled with resin (300).

The resin (300) is preferably heated prior to the infusion into the internal damaged area (101), so as to reach the lowest viscosity value to ease the infusion into the damaged internal area (101).

Moreover, during the first 15-20 minutes after the start of the infusion (vacuum activation) a heat lamp or heating system keeps the temperature of the resin (300) to the lowest viscosity value.

Furthermore, after the infusion phase (15-20 minutes or resin reservoir (402) emptiness), the heating system raises the temperature to start the curing cycle as per the required resin (300) specification.

Once the resin (300) has been infused into the internal damaged area (101) of the element (100) of composite material and once the resin (300) is cured, the structural properties (resistance and load capability) of the element (100) of composite material are fully restored.

As already mentioned, the present invention further refers to a device (400) for repairing an element (100) of composite material.

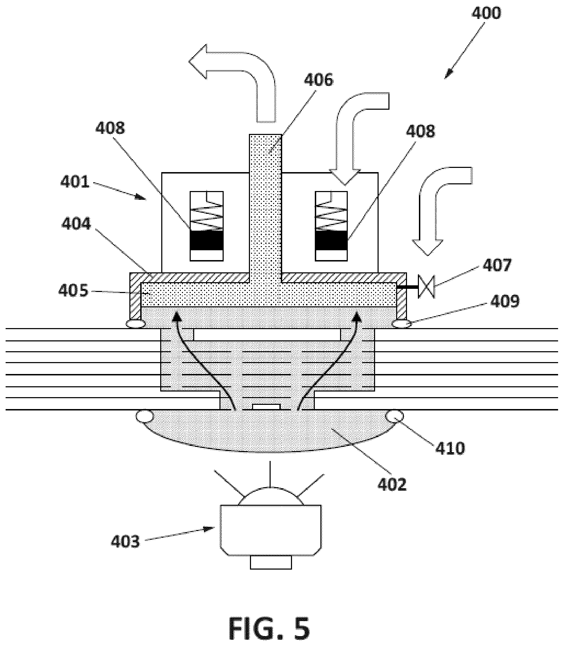

Figure 5 schematically depicts a device (400) for repairing an element (100) of composite material, according to a first embodiment of the present invention.

The device (400) comprises an outlet bell (401) (or vacuum bell), a resin reservoir (402) and a heating module (403).

The outlet bell (401) is configured to be arranged at the delaminated area of the element (100) of composite material and, more particularly, at the outlet side of the element (100) of composite material.

The resin reservoir (402) is configured to be arranged at the delaminated area of the element (100) of composite material and, more particularly, at the inlet side of the element (100) of composite material.

The heating module (403) is arranged in correspondence with the resin reservoir (402).

The heating module (403), as schematically depicted in Figure 5, may be a heat lamp.

The outlet bell (401) comprises a housing (404) configured to generate a receptacle (405) between the element (100) of composite material and the housing (404).

The outlet bell (401) comprises an outlet conduct (406) configured to receive the resin flowing out from the second non-through holes (200b) and passing through the receptacle (405). In the cases where vacuum is applied, the outlet conduct (406) (or vacuum conduct) is further configured to apply and/or supply vacuum to the interior of the receptacle (405).

The vacuum bell (401) further comprises a vacuum percussion module (407) configured to establish a percussion mode governing the application of vacuum to the interior of the receptacle (405).

The vacuum bell (401) further comprises a vibrating module (408) configured to generate and transmit vibrations (preferably at a frequency between 20 Hz and 1000 Hz) to the element (100) of composite material. For example, the vibrating module (408) may comprise an electrically displaced mass (or masses) configured to generate in-plane alternative vibrations.

The vacuum bell (401) further comprises a first sealing joint (409) configured to seal the interface between the housing (404) and the surface of the outlet side of the element (100) of composite material.

The resin reservoir (402) further comprises a second sealing joint (410) configured to seal the interface between the resin reservoir (402) and the surface of the inlet side of the element (100) of composite material.

The resin reservoir (402) is configured to be filled with the resin (300) which is to be infused into the internal damaged area (101) of the element (100) of composite material.

The heating module (403) is configured to heat the resin (300) within the resin reservoir (402) and to maintain the resin (300) at a predetermined temperature value ensuring a minimum viscosity of the resin (300) which is to be infused into the internal damaged area (101) of the element (100) of composite material.

The heating module (403) is further configured to apply heat into the resin (300) which has already been infused into the internal damaged area (101) of the element (100) of composite material, for ensuring that the resin (300) that has already been infused be cured inside the element (100) of composite material.

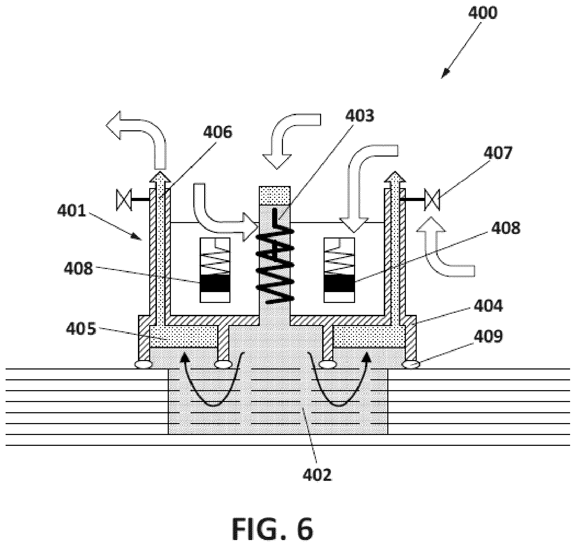

Figure 6 schematically depicts a device for repairing an element of composite material, according to a second embodiment of the present invention.

The device (400), according to the second embodiment, is meant to be used when the internal damaged area (101) of the element (100) of composite material is only accessible from one side of the element (100) of composite material.

Thus, in this case, the first non-through holes (200a) and the second non-through holes (200b) run from one and the same side of the element of composite material up to the internal damaged area (101).

As shown in Figure 6, the housing (404) of the vacuum bell (401) generates two separate internal spaces within the housing (404), namely:
- a first internal space configured to serve as the resin reservoir (402) and configured to contain the resin (300) which is to be infused within the internal damaged area (101), and;
- a second internal space configured as the receptacle (405) and connected to a vacuum conduct (406).

The first internal space configured as a resin reservoir (402) may be connected to a resin supply.

Furthermore, a heating module (403) is arranged in correspondence with the resin reservoir (402) and/or with the resin supply.

## Claims

1. Method for repairing an element (100) of composite material, the method comprising, upon detection of an internal damaged area (101) within the element (100) of composite material, infusing a resin (300) into the internal damaged area (101) of the element (100) of composite material, wherein the method comprises:
- drilling the element (100) of composite material with at least one first non-through hole (200a) and at least one second non-through hole (200b), each of the non-through holes (200) running from one face of the element (100) of composite material up to, at least, the internal damaged area (101), and;
- infusing the resin (300) from the at least one first non-through hole (200a) until the resin (300) fills at least part of the internal damaged area (101) of the element (100) of composite material;
wherein the method is **characterized in that** it comprises applying vibrations at a given frequency to the element (100) of composite material.

2. Method for repairing an element (100) of composite material according to claim 1, **characterized in that** the application of vibrations to the element (100) of composite material comprise using mechanical means directly impacting or shaking the element (100) of composite material.

3. Method for repairing an element (100) of composite material according to claim 1 or 2, **characterized in that** the application of vibrations to the element (100) of composite material comprise applying varying vacuum at the at least one second non-through hole (200b).

4. Method for repairing an element (100) of composite material according to any preceding claim, **characterized in that** the vibrations are applied at a frequency value between 0,5 and 1,5 of the normal frequency mode corresponding to the element (100) of composite material.

5. Method for repairing an element (100) of composite material according to any preceding claim, **characterized in that** it comprises heating the resin (300) prior to infusing the resin (300) into the internal damaged area (101) of the element (100) of composite material.

6. Method for repairing an element (100) of composite material according to any of claims 1 to 5, **characterized in that** the at least one first non-through-hole (200a) runs from a first face of the element (100) of composite material up to, at least, the internal damaged area (101) and the at least one second non-through-hole (200b) runs from a second face of the element (100) of composite material up to, at least, the internal damaged area (101).

7. Method for repairing an element (100) of composite material according to any preceding claim, **characterized in that** each first non-through-hole (200a) and each second non-through-hole (200b) are distributed in such a way that the projection of each first non-through-hole (200a) on the second face of the element (100) of composite material does not coincide with the projection of any second non-through-hole (200b) on the second face of the element (100) of composite material and vice versa.

8. Device (400) for repairing an element (100) of composite material, the element (100) of composite material having an internal damaged area (101), the internal damaged area (101) being accessible from the outside of the element (100) of composite material through at least one first non-through hole (200a) and at least one second non-through hole (200b), wherein the device (400) is **characterized in that** it comprises:
o a resin reservoir (402) configured to contain resin to be infused into the internal damaged area (101) of the element (100) of composite material through the at least one first non-through hole (200a);
o an outlet bell (401) connected to an outlet conduct (406), the outlet bell (401) comprising a housing (404) configured to define a receptacle (405) between the at least one second non-through hole (200b) and the outlet conduct (406), the receptacle (405) being isolated from the resin reservoir (402), wherein the receptacle (405) is configured to receive the resin flowing out from the at least one second non-through hole (200b), and;
o means for generating vibrations to be transmitted to the element (100) of composite material.

9. Device (400) for repairing an element (100) of composite material according to claim 8, **characterized in that** the means for generating vibrations to be transmitted to the element (100) of composite material comprise a vibrating module (408) configured to generate mechanical vibrations to be transmitted to the element (100) of composite material.

10. Device (400) for repairing an element (100) of composite material according to claim 8 or 9, **characterized in that** the means for generating vibrations to be transmitted to the element (100) of composite material comprise a vacuum percussion module (407) configured to establish a percussion mode governing the application of vacuum to the interior of the receptacle (405).

11. Device (400) for repairing an element (100) of composite material according to any of claims 8 to 10, **characterized in that** it comprises a heating module (403) configured to heat the resin contained within the resin reservoir (402).

12. Device (400) for repairing an element (100) of composite material according to claim 11, **characterized in that** the heating module (403) is further configured to heat the resin (300) infused into the internal damaged area (101) of the element (100) of composite material.

13. Device (400) for repairing an element (100) of composite material according to any of claims 8 to 12, **characterized in that** the vacuum bell (401) comprises a first sealing joint (409) configured to seal the interface between the housing (404) and the surface of the element (100) of composite material.

14. Device (400) for repairing an element (100) of composite material according to any of claims 8 to 13, **characterized in that** the resin reservoir (402) comprises a second sealing joint (409) configured to seal the interface between the resin reservoir (402) and the surface of the element (100) of composite material.

15. Device (400) for repairing an element (100) of composite material according to any of claims 8 to 14, **characterized in that** the housing (404) of the vacuum bell (401) is configured to generate two separate internal spaces within the housing (404), namely:
o a first internal space configured as the resin reservoir (402) and configured to contain the resin (300) which is to be infused within the internal damaged area (101), and;
o a second internal space configured as the receptacle (405) and connected to the vacuum conduct (406).
